# EUROPÄISCHE PATENTSCHRIFT

(11) **EP 3 682 224 B1**
(45) Veröffentlichungstag und Bekanntmachung des Hinweises auf die Patenterteilung: **22.12.2021**
(21) Anmeldenummer: 18758601.1
(22) Anmeldetag: 21.08.2018
(51) Int. Cl.: G01N 15/06, F02D 41/14, G01N 27/70, H01T 19/04, G01N 15/00

(54) **PARTIKELSENSOR MIT EINER PLANAREN, FREIGESTELLTEN KORONA-ENTLADUNGS-ELEKTRODE**
PARTICLE SENSOR HAVING A PLANAR, EXPOSED CORONA DISCHARGE ELECTRODE
DÉTECTEUR DE PARTICULES POURVU D'UNE ÉLECTRODE À DÉCHARGE EN COURONNE, DÉGAGÉE ET PLANE

(30) Priorität: 12.09.2017 DE 102017216046
(43) Veröffentlichungstag der Anmeldung: 22.07.2020
(73) Patentinhaber: Robert Bosch GmbH, 70442 Stuttgart (DE)
(72) Erfinder: GENTER, Simon, 76227 Karlsruhe (DE); GLANZ, Uwe, 71679 Asperg (DE); BAARS, Enno, 71229 Leonberg (DE); RUSANOV, Radoslav, 70499 Stuttgart (DE); TIEFENBACH, Andy, 71665 Vaihingen-Horrheim (DE); SCHITTENHELM, Henrik, 70176 Stuttgart (DE)
(86) Internationale Anmeldenummer: PCT/EP2018/072502
(87) Internationale Veröffentlichungsnummer: WO 2019/052785

(56) Entgegenhaltungen:
- EP-A1- 2 824 453
- DE-A1-102005 010 263
- DE-T5-112015 004 811
- US-A1- 2017 115 198
- US-B1- 6 265 811

## Beschreibung

### Stand der Technik

Die vorliegende Erfindung betrifft einen Partikelsensor nach dem Oberbegriff des Anspruchs 1 und ein Verfahren zum Herstellen eines solchen Partikelsensors nach dem Oberbegriff des unabhängigen Verfahrensanspruchs.

Ein solcher Partikelsensor und ein solches Verfahren sind aus der EP 2 824 453 A1 (WO 2013/125181 A1) bekannt. Der bekannte Partikelsensor weist ein als Schichtstapel realisiertes keramisches Trägerelement, eine Korona-Entladungs-Elektrode, die eine Spitze aufweist, eine Masse-Elektrode und wenigstens eine lonenfänger-Elektrode auf.

Weitere Partikelsensoren sind bekannt aus der DE 11 2015 004811 T5, der EP 2 824 453 A1, der US 2017/115198 A1, der DE 10 2005 010263 A1 und der US 6 265 811 B1.

In Bezug auf den Zustand von Partikelfiltern von Kraftfahrzeugen werden zunehmend Partikelsensoren für Zwecke der On-Board Diagnostik eingesetzt. Dabei hat ein nach einem resistiven Prinzip arbeitender Partikelsensor eine sehr starke Position auf dem Markt. Die Funktionsweise dieses Sensors basiert auf der Ausbildung von leitfähigen Rußpfaden zwischen zwei Interdigital-Elektroden und einer Auswertung einer Anstiegszeit des Stromes bei angelegter Spannung als Maß für die Rußkonzentration. Es wird die Massenkonzentration (mg/m³) gemessen. Die Berechnung der Anzahlkonzentration ist bei diesem Sensorkonzept aus vielfältigen Gründen sehr schwer bis unmöglich. Der Sensor wird periodisch regeneriert, in dem er durch ein integriertes Heizelement auf mindestens 700°C gebracht wird, wodurch die Rußablagerungen wegbrennen.

In der Wissenschaft wird seit längerem diskutiert, ob die Gesamtmasse (in mg/m³) oder die Anzahl der Partikel (Partikel/m³) in Bezug auf eine Gesundheitsgefährdung kritischer sind. Dabei ist insbesondere zu beachten, dass gerade kleine Partikel, welche aufgrund ihrer sehr kleinen Masse (m∼r³) einen nur geringen Anteil an der Gesamtmasse haben, besonders kritisch sein können, weil sie aufgrund ihrer kleinen Größe tief in den menschlichen Körper eindringen können. Es ist absehbar, dass die Gesetzgebung eine Verwendung von zur Messung der Anzahlkonzentration geeigneten Partikelsensoren vorschreiben wird, sobald von ihrer Detektionsleistung und von ihrem Preis her akzeptable Partikelsensoren auf dem Markt verfügbar sind.

Ein aus der eingangs genannten EP 2 824 453 A1 (WO 2013/125181 A1) bekannter Hochspannungspartikelsensor verwendet ein Ladungsmessungsprinzip zur Erfassung der Partikelkonzentration. Dabei werden die (Ruß-) Partikel über eine Korona-Entladung aufgeladen. Eine Korona-Entladung ist eine elektrische Entladung in einem zunächst nichtleitendem Medium, bei der freie Ladungsträger durch eine Ionisation von Bestandteilen des Mediums erzeugt werden. Die Aufladung der Partikel erfolgt durch Anhaften von Ionen. Anschließend wird die elektrische Ladung dieser Partikel bzw. der elektrische Strom, der durch den Transport der geladenen Partikel mit dem Abgasstrom aus dem Hochspannungspartikelsensor entkommt, gemessen. Bei dem bekannten Hochspannungspartikelsensor erfolgt eine Messung dieses auch als "escaping current" bezeichneten Stroms. Die Korona-Entladung findet dort in einer "ion generation section" statt. Die dabei erzeugten Ionen werden über eine Düse mit unter Druck stehender Luft in eine "electric charge section" eingeblasen, der über einen weiteren Einlass Messgas zugeführt wird. Die Korona-Entladung findet bei dem bekannten Sensor damit räumlich getrennt von dem Messgas statt, dessen Beladung mit Partikeln gemessen werden soll. Die Messgaseinlassöffnung liegt hinter (im Strom der Ionen: stromabwärts) der Korona-Entladungs-Elektrode.

### Offenbarung der Erfindung

Von diesem Stand der Technik unterscheidet sich die vorliegende Erfindung in ihren Vorrichtungsaspekten durch die kennzeichnenden Merkmale des Anspruchs 1 und in ihren Verfahrensaspekten durch die kennzeichnenden Merkmale des unabhängigen Verfahrensanspruchs. Danach zeichnet sich der Partikelsensor dadurch aus, dass die Elektroden auf dem keramischen Trägerelement planar und anhaftend aufliegen und damit planare Elektroden bilden, und dass ein von Grenzflächen des keramischen Trägerelements begrenzter Teilbereich des keramischen Trägerelements, auf dem die Spitze der planaren Korona-Entladungs-Elektrode aufliegt, als Spitze des keramischen Trägerelements aus dem übrigen keramischen Trägerelement herausragt.

Das Verfahren zeichnet sich dadurch aus, dass ein keramisches Trägerelement mit auf dem keramischen Trägerelement planar anhaftenden Elektroden belegt, wird, und dass ein von Grenzflächen des keramischen Trägerelementes begrenzter Teilbereich des keramischen Trägerelements, auf dem die Spitze der Korona-Entladungs-Elektrode aufliegt, freigestellt wird, so dass er als Spitze des keramischen Trägerelements aus dem übrigen keramischen Trägerelement herausragt.

Dadurch, dass beim Herstellen des Partikelsensors ein von Grenzflächen des keramischen Trägerelementes begrenzter Teilbereich des keramischen Trägerelements, auf dem die Spitze der Korona-Entladungs-Elektrode aufliegt, freigestellt wird, so dass er als Spitze des keramischen Trägerelements aus dem übrigen keramischen Trägerelement herausragt, wird erreicht, dass sich die im Betrieb des Partikelsensors von der Spitze der Korona-Entladungs-Elektrode ausgehende Korona-Entladung auch in den freigestellten Bereich des keramischen Trägerelements ausbreiten kann und die von der Spitze der Korona-Entladungs-Elektrode ausgehende Korona-Entladung nicht von in der Ebene der planaren Korona-Entladungs-Elektrode über die Spitze der Korona-Entladungs-Elektrode hinausragende Keramik behindert wird.

Eine bevorzugte Ausgestaltung des Partikelsensors zeichnet sich dadurch aus, dass das keramische Trägerelement in dem Teilbereich des keramischen Trägerelements, auf dem die Spitze der planaren Korona-Entladungs-Elektrode aufliegt, parallel zu der Ebene, in der die planare Korona-Entladungs-Elektrode liegt, liegende Querschnitte aufweist, die die Form der Spitze der Korona-Entladungs-Elektrode aufweisen.

Als Folge der gleichen Form und bevorzugt auch einer gleichen Größe wird auch die von seitlichen Rändern der Spitze der Korona-Entladungs-Elektrode ausgehende Korona-Entladung nicht von in der Ebene der planaren Korona-Entladungs-Elektrode über die seitlichen Ränder der Spitze der Korona-Entladungs-Elektrode hinausragende Keramik behindert. Diese vorteilhafte Wirkung ergibt sich auch bei noch Ausgestaltungen, bei denen ein schmaler Rand der Spitze durch einen Laserbearbeitungsschritt verdampft wurde, um den Krümmungsradius der Spitze noch etwas zu verringern und die Spitze damit noch etwas spitzer zu gestalten.

Insgesamt ergibt sich dadurch eine stabilere Korona-Entladung und eine verbesserte Ionisierung des Messgases, weil die spitze Form des keramischen Trägerelements eine bei bestimmungsgemäßer Verwendung des Partikelsensors erfolgende Durchströmung der Korona-Entladungszone mit Messgas weniger behindert als ein ohne solche Spitze verwirklichtes flächiges keramische Trägerelement. Damit ergibt sich eine verbesserte Ionisierung des Messgases und als Folge eine effektivere elektrischen Aufladung von mit dem Messgas transportierten Partikeln.

Bevorzugt ist auch, dass die Querschnitte mit in Richtung zu einer in die Keramik weisenden Normalen der planaren Korona-Entladungs-Elektrode größer werdendem Abstand von der planaren Korona-Entladungs-Elektrode kleiner werden. Durch dieses Merkmal, das gewissermaßen eine über eine Freistellung der Spitze der Korona-Entladungs-Elektrode hinausgehende Untergrabung der Spitze der Korona-Entladungs-Elektrode beschreibt, wird die Ausbreitungsfreiheit für die von der Spitze der Korona-Entladungs-Elektrode ausgehende Korona-Entladung weiter vergrößert, was die angegebenen Vorteile weiter vergrößert.

Erfindungsgemäß ist vorgesehen, dass das Trägerelement eine zwischen der planaren Korona-Entladungs-Elektrode und der Masse-Elektrode angeordnete Ausnehmung aufweist, in die der Teilbereich hineinragt. Bei der Ausnehmung kann es sich um ein Sackloch oder ein durchgehendes Loch handeln. Durch diese Ausgestaltung kann das keramische Trägerelement als einstückiges Bauteil verwirklicht werden, was die Herstellung vereinfacht und die Robustheit des Partikelsensors bei dessen Verwendung verbessert. Dies ist insbesondere bei der Verwendung des Partikelsensors in Abgasanlagen von Kraftfahrzeugen von Vorteil.

Eine weitere bevorzugte Ausgestaltung zeichnet sich dadurch aus, dass ein Teil des Trägerelements, auf dem die planare Korona-Entladungs-Elektrode anhaftend aufliegt und ein Teil des Trägerelements, auf dem die Masse-Elektrode aufliegt, durch wenigstens einen Steg, der ein Bestandteil des einstückigen keramischen Trägerelements ist, miteinander verbunden sind. Die Ausführung mit dem Loch hat den Vorteil, dass Messgas auch durch das Loch strömen kann, was den Strömungswiderstand verringert und die Aufladung der Partikel verbessert.

Mit Blick auf das Verfahren ist bevorzugt, dass das Freistellen des Teilbereichs des Trägerelements, auf dem die Spitze der Korona-Entladungs-Elektrode aufliegt, durch ein Material abtragendes Verfahren wie Fräsen erfolgt. Durch Fräsen kann die erwünschte Form besonders genau hergestellt werden.

Bevorzugt ist auch, dass das Freistellen des Teilbereichs des Trägerelements, auf dem die Spitze der Korona-Entladungs-Elektrode aufliegt, beim Herstellen des keramischen Trägerelements durch einen Spritzgussvorgang erfolgt. Diese Ausgestaltung hat den Vorteil, einer besonders einfachen und damit zeitsparenden Herstellung.

Eine bevorzugte Ausgestaltung zeichnet sich dadurch aus, dass das Belegen des keramischen Trägerelements mit den anhaftend aufliegenden Elektroden durch Siebdruck mit anschließender gemeinsamer (Co) Sinterung erfolgt. Durch dieses Merkmal können die Elektroden mit geringem Materialaufwand und guter Festigkeit der Verbindung mit dem keramischen Trägerelement hergestellt und mit dem keramischen Trägerelement verbunden werden.

Bevorzugt ist auch, dass ein Krümmungsradius der Spitze der Korona-Entladungs-Elektrode nach dem Siebdruck durch mit einem Laserstrahl erfolgendes Verdampfen von Material der Korona-Entladungs-Elektrode verkleinert wird. Durch dieses Merkmal wird die an der Spitze der Korona-Entladungs-Elektrode herrschende elektrische Feldstärke vergrößert, was das erwünschte Erzeugen einer Korona-Entladung begünstigt.

Die Erfindung ist allgemein zur Messung von Partikelkonzentrationen (nicht notwendigerweise Rußpartikel) in Messgasen (nicht notwendigerweise Abgas) verwendbar, zum Beispiel zur Erfassung von Staubkonzentrationen. Sofern in dieser Anmeldung von Abgas und Rußpartikeln die Rede ist, soll dies jeweils als Beispiel für die allgemeineren Begriffe Partikel und Messgas verstanden werden. Ausführungsbeispiele der Erfindung sind in den Zeichnungen dargestellt und werden in der nachfolgenden Beschreibung näher erläutert. Dabei bezeichnen gleiche Bezugszeichen in verschiedenen Figuren jeweils gleiche oder zumindest ihrer Funktion nach vergleichbare Elemente. Bei der Beschreibung einzelner Figuren wird ggf. auch auf Elemente aus anderen Figuren Bezug genommen. Es zeigen, jeweils in schematischer Form:
- Figur 1: ein technisches Umfeld der Erfindung in Form eines Abgasrohrs und einer Partikelsensoreinheit, die einen Partikelsensor, einen Kabelbaum und ein Steuergerät aufweist;
- Figur 2: einen Querschnitt eines keramischen Trägerelements eines Partikelsensors, der verschiedene Elektroden trägt;
- Figur 3: eine Draufsicht auf ein Elektroden tragendes keramisches Trägerelement eines Ausführungsbeispiels eines erfindungsgemäßen Partikelsensors;
- Figur 4: einen Querschnitt einer ersten Ausgestaltung des Ausführungsbeispiels aus Figur 3;
- Figur 5: eine dazu alternative Ausgestaltung, bei der eine Ausnehmung des keramischen Trägerelements ein durchgehendes Loch ist;
- Figur 6: eine weitere alternative Ausgestaltung, bei der Teile des keramischen Trägerelement durch einen Steg miteinander verbunden sind;
- Figur 7: ein weiteres Ausführungsbeispiel eines Elektroden tragenden keramischen Trägerelements eines erfindungsgemäßen Partikelsensors;
- Figur 8: ein Flussdiagramm eines Ausführungsbeispiels eines erfindungsgemäßen Herstellungsverfahrens;
- Figur 9: eine Draufsicht auf die Spitze einer planaren Korona-Entladungs-Elektrode vor und nach einem Laserbearbeitungsschritt; und
- Figur: 10ein auf einer Rückseite des keramischen Trägerelements angeordnetes Heizelement.

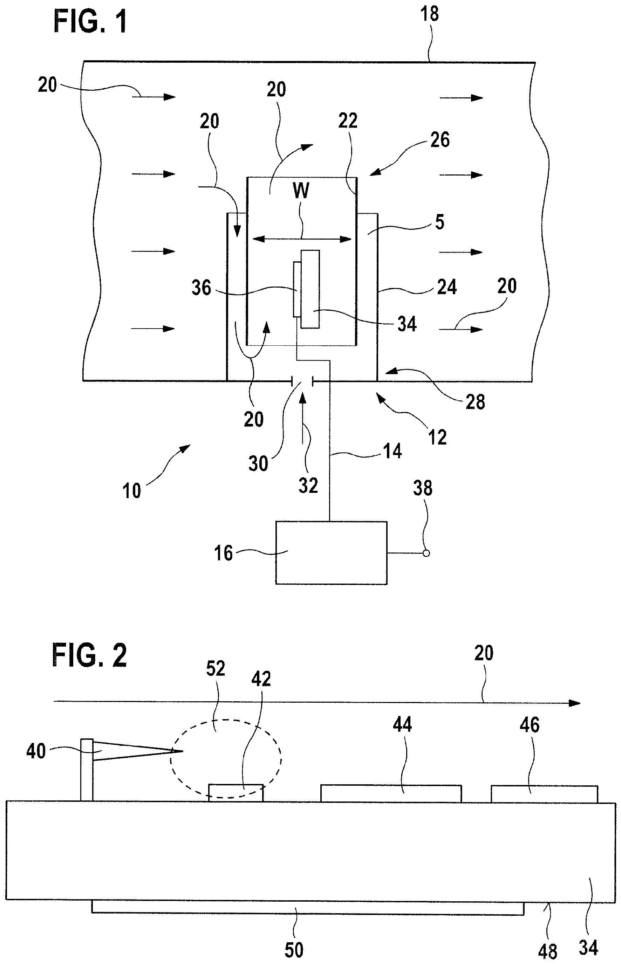

Im Einzelnen zeigt die Figur 1 eine Partikelsensoreinheit 10, die einen Partikelsensor 12 aufweist, der über einen Kabelbaum 14 mit einem Steuergerät 16 der Partikelsensoreinheit 10 verbunden ist.

Der Partikelsensor 12 ragt in ein Abgasrohr 18 hinein, das Abgas als Messgas 20 führt, und weist eine in den Strom des Messgases 20 hineinragende Rohranordnung eines inneren metallischen Rohres 22 und eines äußeren metallischen Rohres 24 auf. Eine solche Rohranordnung wird bei einem bevorzugten Ausführungsbeispiel der Erfindung verwendet, stellt aber kein wesentliches Element der Erfindung dar.

Die beiden metallischen Rohre 22, 24 haben bevorzugt eine allgemeine Zylinderform oder Prismenform. Die Grundflächen der Zylinderformen sind bevorzugt kreisförmig, elliptisch oder vieleckig. Die Zylinder sind bevorzugt koaxial angeordnet, wobei die Achsen der Zylinder quer zur Strömungsrichtung des Messgases 20 liegen, die im Abgasrohr 18 außerhalb der Rohranordnung herrscht. Das innere metallische Rohr 22 ragt an einem der Einbauöffnung im Abgasrohr 18 abgewandten ersten Ende 26 der Rohranordnung über das äußere metallische Rohr 24 hinaus in das strömende Messgas 20 hinein. An einem der Einbauöffnung im Abgasrohr 18 zugewandten zweiten Ende 28 der beiden metallischen Rohre 22, 24 ragt das äußere metallische Rohr 24 über das innere metallische Rohr 22 hinaus. Die lichte Weite des äußeren metallischen Rohrs 24 ist bevorzugt so viel größer als der äußere Durchmesser des inneren metallischen Rohrs 22, dass sich zwischen den beiden metallischen Rohren 22, 24 ein erster Strömungsquerschnitt, bzw. ein Spalt 5 ergibt. Die lichte Weite W des inneren metallischen Rohrs 22 bildet einen zweiten Strömungsquerschnitt.

Diese Geometrie hat zur Folge, dass Messgas 20 über den ersten Strömungsquerschnitt an dem ersten Ende 26 in die Rohranordnung eintritt, dann an dem zweiten Ende 28 der Rohranordnung seine Richtung ändert, in das innere metallische Rohr 22 eintritt und aus diesem vom vorbeiströmenden Messgas 20 herausgesaugt wird. Dabei ergibt sich im inneren metallischen Rohr 22 eine laminare Strömung. Diese Rohranordnung von Rohren 22, 24 wird mit einem bevorzugten Ausführungsbeispiel eines erfindungsgemäßen Partikelsensors quer zur im Abgasrohr 18 herrschenden Strömungsrichtung des Messgases 20 an dem Abgasrohr 18 und seitlich in den Strom des Messgases 20 hineinragend befestigt, wobei das Innere der metallischen Rohre 22, 24 bevorzugt gegenüber der Umgebung des Abgasrohrs 18 abgedichtet ist. Die Befestigung erfolgt bevorzugt mit einer Schraubverbindung.

In einem Ausführungsbeispiel kann die Befestigung auch eine Öffnung 30 nach außen aufweisen, über die bedarfsweise Frischluft 32 von außen in die Rohranordnung eingeblasen werden kann.

In dem inneren metallischen Rohr 22 ist ein keramisches Trägerelement 34 angeordnet, das eine mehrere dort anhaftende Elektroden aufweisende Elektrodenanordnung 36 trägt. Die Elektroden der Elektrodenanordnung 36 sind dem vorbeiströmenden Messgas 20 ausgesetzt und über den Kabelbaum 14 mit dem Steuergerät 16 der Partikelsensoreinheit 10 verbunden. Das Steuergerät 16 ist dazu eingerichtet, den Partikelsensor 12 zu betreiben und aus an Elektroden der Elektrodenanordnung 36 auftretenden elektrischen Größen wie Strom und Spannung ein Ausgangssignal zu erzeugen, dass die Partikelkonzentration im Abgas abbildet. Dieses Ausgangssignal wird an einem Ausgang 38 des Steuergeräts 16 bereitgestellt. Die Erzeugung des Ausgangssignals erfolgt zum Beispiel nach dem Prinzip, das in der eingangs genannten EP 2 824 453 A1 beschrieben ist.

Figur 2 zeigt einen Querschnitt eines keramischen Trägerelements 34 eines Partikelsensors, das verschiedene Elektroden trägt, und dient zur Veranschaulichung des Arbeitsprinzips eines planaren, mit einer Korona-Entladung arbeitenden Partikelsensors.

Auf dem elektrisch isolierenden keramischen Trägerelement 34 ist eine Korona-Entladungs-Elektrode 40, eine Masse-Elektrode 42 und eine lonenfänger-Elektrode 44 angeordnet. Im dargestellten Ausführungsbeispiel trägt das keramische Trägerelement 34 zusätzlich noch eine als Partikel-Ladungs-Detektions-Elektrode dienende Mess-Elektrode 46, die aber nicht zwingend erforderlich ist. Auf einer Rückseite 48 des keramischen Trägerelements 34 ist bei einer Ausgestaltung ein Heizelement 50 in Form einer dort anhaftend anliegenden Heiz-Elektrode angeordnet.

Das keramische Trägerelement 34 ist mit seiner Längsrichtung parallel zur Richtung des dort strömenden Messgases 20 im inneren metallischen Rohr 22 der Figur 1 angeordnet. Über diese Anordnung von Korona-Entladungs-Elektrode 40, Masse-Elektrode 42, lonenfänger-Elektrode 44 und ggf. noch Mess-Elektrode 46 strömt Messgas 20 mit der durch die Pfeilrichtung angegebenen Strömungsrichtung. Die Korona-Entladung findet zwischen der Korona-Entladungs-Elektrode 40 und der Masse-Elektrode 42 in einer Korona-Entladungszone 52 statt. Die Korona-Entladungszone 52 wird von mit Partikeln beladenem Messgas 20 durchströmt. In der Korona-Entladungszone 52 wird dort vorhandenes Messgas 20 zum Teil ionisiert. Die Partikel nehmen anschließend Ionen und damit eine elektrische Ladung auf.

Die zur Erzeugung der Korona-Entladung erforderliche Spannung zwischen der Korona-Entladungs-Elektrode 40 und der Masse-Elektrode 42 wird durch eine in das Steuergerät 16 integrierte Hochspannungsquelle erzeugt.

Die lonenfänger-Elektrode 44 fängt Ionen ab, die nicht an den schwereren und damit trägeren mit dem Messgas 20 transportierten Partikeln haften. Das in der Figur 2 nicht dargestellte innere metallische Rohr 22 kann als Gegen-Elektrode für die lonenfänger-Elektrode 44 dienen. Die Messung der mit den Rußpartikeln transportierten elektrischen Ladung findet entweder mittels Ladungsinfluenz an der als Partikel-Ladungs-Detektions-Elektrode dienenden Mess-Elektrode 46 statt, oder sie erfolgt mit dem "escaping current"-Prinzip, dessen Prinzip in der EP 2 824 453 A1 erläutert ist.

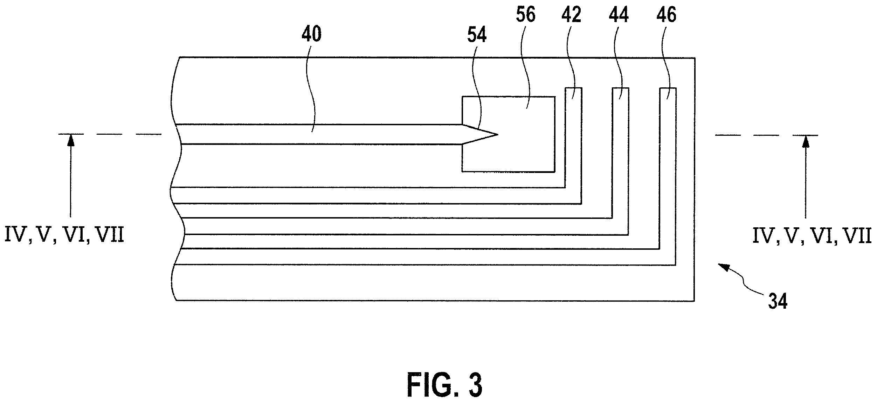

Figur 3 zeigt eine Draufsicht auf ein Elektroden tragendes keramisches Trägerelement 34 eines Ausführungsbeispiels eines erfindungsgemäßen Partikelsensors. Auf dem keramischen Trägerelement 34 liegen eine Korona-Entladungs-Elektrode 40, die eine Spitze 54 aufweist, eine Masse-Elektrode 42 und eine lonenfänger-Elektrode 44 sowie ggf. noch eine Mess-Elektrode 46 jeweils planar und anhaftend auf und bilden planare Elektroden.

Ein von Grenzflächen des keramischen Trägerelements begrenzter Teilbereich des keramischen Trägerelements 34, auf dem die Spitze 54 der planaren Korona-Entladungs-Elektrode 40 aufliegt, ragt als Spitze des keramischen Trägerelements 34 aus dem übrigen keramischen Trägerelement heraus. Dieser Teilbereich, der in der Figur 3 durch die Spitze 54 der Korona-Entladungs-Elektrode 40 verdeckt wird, ragt mit der Spitze 54 in eine Ausnehmung 56 des keramischen Trägerelements 34 hinein, die nicht mit dem keramischen Material des keramischen Trägerelements 34 ausgefüllt ist.

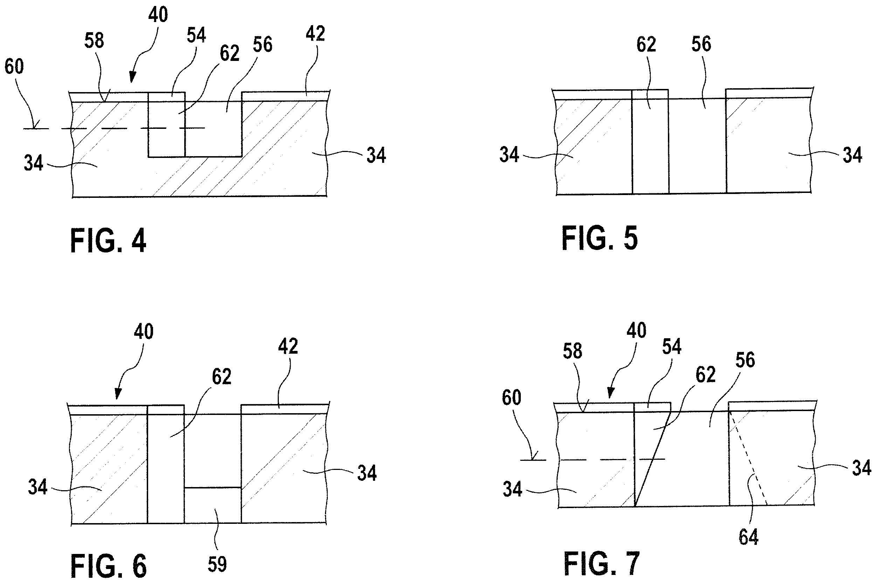

Figur 4 zeigt einen Querschnitt einer ersten Ausgestaltung des Ausführungsbeispiels aus Figur 3. Das keramische Trägerelement 34 weist eine Ebene 58 auf, in der die planare Korona-Entladungs-Elektrode 40 liegt. Dazu parallele, virtuelle Querschnitte 60 des keramischen Trägerelements 34 ragen in dem einen Spitze bildenden Teilbereich 62 des keramischen Trägerelements 34, auf dem die Spitze 54 der planaren Korona-Entladungs-Elektrode 40 aufliegt, nicht über den Rand der Spitze 54 der planaren Korona-Entladungs-Elektrode 40 heraus. Die Spitze 54 der planaren Korona-Entladungs-Elektrode 40 liegt damit auf dem eine Spitze bildenden Teilbereich 62 des keramischen Trägerelements 34 auf.

Bei der dargestellten Ausgestaltung ragen die Spitze 54 der planaren Korona-Entladungs-Elektrode 40 und die seitlichen Ränder der Spitze 54 der planaren Korona-Entladungs-Elektrode 40 nicht über das Material des eine Spitze bildenden Teilbereichs 62 des keramischen Trägerelements 34 hinaus. Die Spitze 54 der planaren Korona-Entladungs-Elektrode 40 liegt damit vom Material des keramischen Trägerelements 34 freigestellt auf dem eine Spitze bildenden Teilbereich 62 des keramischen Trägerelements 34 in der Ausnehmung 56.

Das keramische Trägerelement 34, auf dem die Elektroden planar aufliegen, besteht bevorzugt aus einem einzigen Stück oder aus mehreren Keramikfolien, welche zusammengesintert sind (Folienlaminat). Um in diesem keramischen Trägerelement 34 den eine Spitze bildenden Teilbereich 62 des keramischen Trägerelements 34 verwirklichen zu können, weist das keramische Trägerelement 34 die zwischen der planaren Korona-Entladungs-Elektrode 40 und der Masse-Elektrode 42 angeordnete Ausnehmung 56 auf, in die der Teilbereich 62 des keramischen Trägerelements 34, auf dem die Spitze 54 der planaren Korona-Entladungs-Elektrode 40 aufliegt, von der Seite her hineinragt. Bei der Ausnehmung 56 kann es sich um ein nicht durchgehendes Sackloch handeln, wie es in der Figur 4 dargestellt ist.

Figur 5 zeigt eine dazu alternative Ausgestaltung, bei der die Ausnehmung 56 ein durchgehendes Loch ist.

Fig. 6 zeigt eine weitere alternative Ausgestaltung, bei der der Teil des keramischen Trägerelements 34, auf dem die planare Korona-Entladungs-Elektrode 40 anhaftend aufliegt und ein Teil des Trägerelements, auf dem die Masse-Elektrode 42 aufliegt, durch wenigstens einen Steg 59, der ein Bestandteil des einstückigen keramischen Trägerelements 34 ist, miteinander verbunden sind. Diese Alternativen (Sackloch, durchgehendes Loch, Steg) gelten auch für das Ausführungsbeispiel nach Figur 7.

Figur 7 zeigt ein weiteres Ausführungsbeispiel eines Elektroden tragenden keramischen Trägerelements 34 eines erfindungsgemäßen Partikelsensors. Auch hier gilt, dass das keramische Trägerelement eine Ebene 58 aufweist, in der die planare Korona-Entladungs-Elektrode 40 liegt. Dazu parallele, virtuelle Querschnitte 60 des keramischen Trägerelements 34 werden mit in Richtung zu einer in Figur 7 nach unten weisenden Normalen der planaren Korona-Entladungs-Elektrode 40 größer werdendem Abstand von der planaren Korona-Entladungs-Elektrode 40 kleiner.

Die planare Korona-Entladungs-Elektrode 40 steht damit an ihrer Spitze 54 und ihren seitlichen Rändern vom Material des keramischen Trägerelements 34 freigestellt auf dem eine Spitze bildenden Teil des keramischen Trägerelements 34, auf dem die Spitze 54 der Korona-Entladungs-Elektrode 40 aufliegt in der Ausnehmung 56, wobei der eine Spitze bildende Teil des keramischen Trägerelements 34, auf dem die Spitze 54 der Korona-Entladungs-Elektrode 40 aufliegt, mit zunehmendem Abstand von der Spitze der Korona-Entladungs-Elektrode kleiner wird, so als wenn die Spitze der Korona-Entladungs-Elektrode untergraben worden wäre. Auch die Masse-Elektrode 42 kann eine solche Untergrabung aufweisen. Dies wird in der Figur 7 durch die gestrichelte Linie verdeutlicht, die bei dieser Ausgestaltung die Lage einer die Ausnehmung 56 begrenzenden Grenzfläche 64 des keramischen Trägerelements 34 repräsentiert.

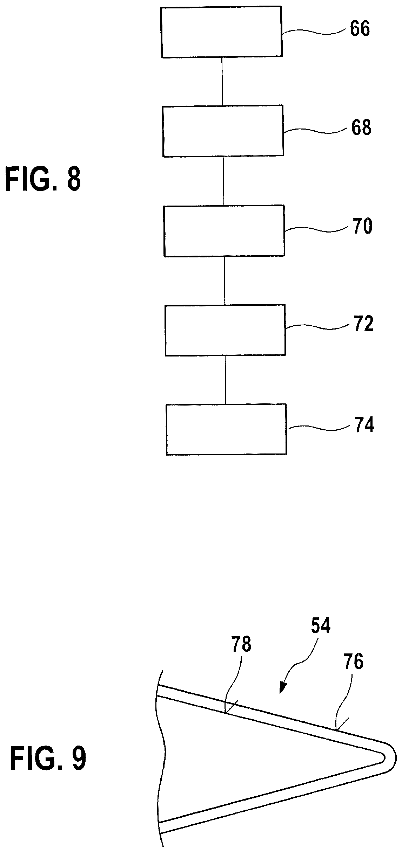

Figur 8 zeigt ein Flussdiagramm eines Ausführungsbeispiels eines erfindungsgemäßen Herstellungsverfahrens. In einem ersten Schritt 66 wird das keramische Trägerelement 34 als Keramikspritzgussteil oder als Keramikfolienteil hergestellt. Dabei wird die Form des keramischen Trägerelements 34 mit der freigestellten oder untergrabenen Spitze bereits durch die Form der Kavität des Spritzgusswerkzeugs hergestellt, oder sie wird nach dem Gießen des Rohlings, bzw. nach dem Laminieren der Keramikfolien, durch einen materialabhebenden zweiten Schritt 68 wie Fräsen erzeugt.

In einem dritten Schritt 70 wird eine Oberfläche des keramischen Trägerelements durch ein Siebdruckverfahren mit den Elektroden 40, 42, 44 und ggf. 46 belegt. In einer bevorzugten Ausgestaltung wird zusätzlich das Heizelement 50 auf der Rückseite 48 des keramischen Trägerelements 34 aufgebracht. Die Rückseite 48 liegt der Seite des keramischen Trägerelements 34 gegenüber, auf der unter anderem die Korona-Entladungs-Elektrode 40 angeordnet ist.

An die Fertigstellung des Keramikspritzgussteils (inklusive Siebdruck der Elektroden) schließt sich ein Wärmebehandlungsschritt als vierter Schritt 72 an, der zum Aushärten des keramischen Materials und der Elektrodenpasten führt.

Diese Schrittfolge wird in einer Ausgestaltung durch einen Laserbearbeitungsschritt als fünfter Schritt 74 ergänzt, der im Folgenden unter Bezug auf die Figur 9 erläutert wird: Figur 9 zeigt eine Draufsicht auf die Spitze 54 einer planaren Korona-Entladungs-Elektrode. Der äußere Rand 76 entspricht dem Ergebnis des Siebdruckschrittes. Um den Krümmungsradius der Spitze zu verkleinern und die Spitze damit noch spitzer auszugestalten, kann mit einem Laser ein äußerer Rand der Elektrode verdampft werden. Als Ergebnis bleibt eine im Vergleich zum Zustand vor dem Laserbearbeitungsschritt spitzere Korona-Entladungs-Elektrode übrig, die durch den inneren Rand 78 begrenzt wird.

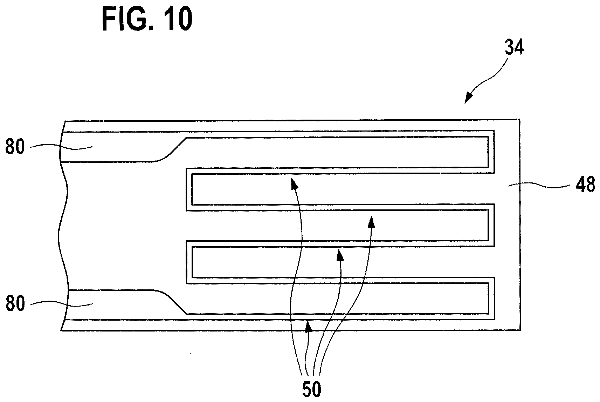

Figur 10 zeigt eine Draufsicht auf die Rückseite des keramischen Trägerelements mit einem dort anhaftend aufliegenden Heizelement 50. Das Heizelement 50 weist bevorzugt eine Mäander-förmige Heiz-Elektrode auf, die zum Beispiel ebenfalls durch ein Siebdruckverfahren aufgebracht worden ist und die zwei Anschlusspads 80 aufweist, über die sie im Betrieb vom Steuergerät mit elektrischer Energie versorgt wird.. Sämtliche Elektroden werden bevorzugt mittels Siebdruck von Platinschichten erzeugt. Das Heizelement 50 kann zur Erhöhung der Temperatur des keramischen Trägerelements und der anhaftend aufliegenden Elektroden verwendet werden, um zum Beispiel eine Ablagerung von Rußpartikeln, welche zu einem Kurzschluss zwischen den Elektroden führen könnten, zu reduzieren und/oder um bereits abgelagerte Rußpartikel zu verbrennen.

## Patentansprüche

1. Partikelsensor (12) mit einem keramischen Trägerelement (34), einer Korona-Entladungs-Elektrode (40), die eine Spitze (54) aufweist, einer Masse-Elektrode (42) und wenigstens einer lonenfänger-Elektrode (44), **dadurch gekennzeichnet, dass** die Elektroden (40, 42, 44) auf dem keramischen Trägerelement (34) planar und anhaftend aufliegen und damit planare Elektroden bilden, und dass ein von Grenzflächen des keramischen Trägerelements (34) begrenzter Teilbereich (62) des keramischen Trägerelements (34), auf dem die Spitze (54) der planaren Korona-Entladungs-Elektrode (40) aufliegt, als Spitze des keramischen Trägerelements (34) aus dem übrigen keramischen Trägerelement herausragt und dass das keramische Trägerelement (34) eine zwischen der planaren Korona-Entladungs-Elektrode (40) und der Masse-Elektrode (42) angeordnete Ausnehmung (56) aufweist, die nicht mit dem keramischen Material des keramischen Trägerelements 34 ausgefüllt ist, und in die der Teilbereich (62) des keramischen Trägerelements (34), auf dem die Spitze (54) der planaren Korona-Entladungs-Elektrode (40) aufliegt, hineinragt.

2. Partikelsensor (12) nach Anspruch 1, **dadurch gekennzeichnet, dass** das keramische Trägerelement (34) in dem Teilbereich (62) des keramischen Trägerelements, auf dem die Spitze (54) der planaren Korona-Entladungs-Elektrode (40) aufliegt, parallel zu der Ebene (58), in der die planare Korona-Entladungs-Elektrode (40) liegt, liegende Querschnitte (60) aufweist, die die Form der Spitze (54) der Korona-Entladungs-Elektrode (40) aufweisen.

3. Partikelsensor (12) nach Anspruch 2, **dadurch gekennzeichnet, dass** die Querschnitte (60) mit in Richtung zu einer Normalen der planaren Korona-Entladungs-Elektrode größer werdendem Abstand von der planaren Korona-Entladungs-Elektrode kleiner werden.

4. Partikelsensor (12) nach einem der vorhergehenden Ansprüche, **dadurch gekennzeichnet, dass** ein Teil des keramischen Trägerelements (34), auf dem die planare Korona-Entladungs-Elektrode (40) anhaftend aufliegt, und ein Teil des keramischen Trägerelements (34), auf dem die Masse-Elektrode (42) aufliegt, durch wenigstens einen Steg (59), der ein Bestandteil des einstückigen keramischen Trägerelements (34) ist, miteinander verbunden sind.

5. Verfahren zur Herstellung eines Partikelsensors (12), nach einem der vorangehenden Ansprüche, **dadurch gekennzeichnet, dass** ein keramisches Trägerelement (34) mit auf dem keramischen Trägerelement (34) planar anhaftenden Elektroden (40, 42, 44, 46) belegt wird, und dass ein von Grenzflächen des keramischen Trägerelementes (34) begrenzter Teilbereich (62) des keramischen Trägerelements (34), auf dem die Spitze (54) der Korona-Entladungs-Elektrode (40) aufliegt, freigestellt wird, so dass er als Spitze aus dem übrigen keramischen Trägerelement herausragt.

6. Verfahren nach Anspruch 5, **dadurch gekennzeichnet, dass** das Freistellen durch ein Material abtragendes Verfahren wie Fräsen erfolgt.

7. Verfahren nach Anspruch 5, **dadurch gekennzeichnet, dass** das Freistellen beim durch einen Spritzgussvorgang erfolgenden Herstellen des keramischen Trägerelements (34) erfolgt.

8. Verfahren zur Herstellung eines Partikelsensors (12) nach einem der Ansprüche 5 bis 7, **dadurch gekennzeichnet, dass** das Belegen des keramischen Trägerelements (34) mit den anhaftend aufliegenden Elektroden (40, 42, 44, 46) durch Siebdruck mit anschließender gemeinsamer (Co) Sinterung erfolgt.

9. Verfahren nach Anspruch 8, **dadurch gekennzeichnet, dass** ein Krümmungsradius der Spitze (54) der Korona-Entladungs-Elektrode (40) nach dem Siebdruck durch mit einem Laserstrahl erfolgendes Verdampfen von Material der Korona-Entladungs-Elektrode (40) verkleinert wird.

## Claims

1. Particle sensor (12), comprising a ceramic carrier element (34), a corona discharge electrode (40) which has a tip (54), an earth electrode (42) and at least one ioncapturing electrode (44), **characterized in that** the electrodes (40, 42, 44) rest on the ceramic carrier element (34) in a planar and adhering manner and therefore form planar electrodes, and **in that** a subregion (62) of the ceramic carrier element (34), which subregion is delimited by boundary areas of the ceramic carrier element (34) and on which subregion the tip (54) of the planar corona discharge electrode (40) rests, protrudes from the rest of the ceramic carrier element as a tip of the ceramic carrier element (34), and **in that** the ceramic carrier element (34) has a recess (56) which is arranged between the planar corona discharge electrode (40) and the earth electrode (42) and is not filled with the ceramic material of the ceramic carrier element (34) and into which the subregion (62) of the ceramic carrier element (34), on which subregion the tip (54) of the planar corona discharge electrode (40) rests, protrudes.

2. Particle sensor (12) according to Claim 1, **characterized in that** the ceramic carrier element (34) has, in the subregion (62) of the ceramic carrier element, on which subregion the tip (54) of the planar corona discharge electrode (40) rests, cross sections (60) which are situated parallel to the plane (58) in which the planar corona discharge electrode (40) lies and which have the shape of the tip (54) of the corona discharge electrode (40).

3. Particle sensor (12) according to Claim 2, **characterized in that** the cross sections (60) decrease with an increasing distance in the direction of a normal of the planar corona discharge electrode from the planar corona discharge electrode.

4. Particle sensor (12) according to one of the preceding claims, **characterized in that** a portion of the ceramic carrier element (34) on which the planar corona discharge electrode (40) rests in an adhering manner and a portion of the ceramic carrier element (34) on which the earth electrode (42) rests are connected to one another by at least one web (59) which is a constituent part of the one-piece ceramic carrier element (34).

5. Method for producing a particle sensor (12) according to one of the preceding claims, **characterized in that** a ceramic carrier element (34) is fitted with electrodes (40, 42, 44, 46) which adhere on the ceramic carrier element (34) in a planar manner, and **in that** a subregion (62) of the ceramic carrier element (34), which subregion is delimited by boundary areas of the ceramic carrier element (34) and on which subregion the tip (54) of the corona discharge electrode (40) rests, is exposed, so that it protrudes from the rest of the ceramic carrier element as a tip.

6. Method according to Claim 5, **characterized in that** the exposure is performed by way of a material-removing process such as milling.

7. Method according to Claim 5, **characterized in that** the exposure is performed during production of the ceramic carrier element (34) which is performed by way of an injection-moulding process.

8. Method for producing a particle sensor (12) according to one of Claims 5 to 7, **characterized in that** the ceramic carrier element (34) is fitted with the electrodes (40, 42, 44, 46), which rest in an adhering manner, by way of screen printing with subsequent, joint (co-)sintering.

9. Method according to Claim 8, **characterized in that** a radius of curvature of the tip (54) of the corona discharge electrode (40) is reduced in size after the screen printing by way of laser-beam evaporation of material of the corona discharge electrode (40).

## Revendications

1. Capteur de particules (12) comprenant un élément porteur en céramique (34), une électrode à décharge par effet de couronne (40) qui comporte une pointe (54), une électrode de masse (42) et au moins une électrode de capture d'ions (44), **caractérisé en ce que** les électrodes (40, 42, 44) reposent de manière plane et adhésive sur l'élément porteur en céramique (34) et forment ainsi des électrodes planes, et **en ce qu'**une zone partielle (62) de l'élément porteur en céramique (34), laquelle est délimitée par des surfaces limites de l'élément porteur en céramique (34) et sur laquelle repose la pointe (54) de l'électrode à décharge par effet couronne plane (40), fait saillie, sous forme de pointe de l'élément porteur en céramique (34), du reste de l'élément porteur en céramique et **en ce que** l'élément porteur en céramique (34) comporte un évidement (56) qui est ménagé entre l'électrode à décharge par effet de couronne plane (40) et l'électrode de masse (42), qui n'est pas rempli de matériau céramique de l'élément porteur en céramique (34) et dans lequel fait saillie la zone partielle (62) de l'élément porteur en céramique (34) sur laquelle repose la pointe (54) de l'électrode à décharge par effet couronne plane (40).

2. Capteur de particules (12) selon la revendication 1, **caractérisé en ce que** l'élément porteur en céramique (34) comporte, dans la zone partielle (62) de l'élément porteur en céramique sur laquelle repose la pointe (54) de l'électrode à décharge par effet de couronne plane (40), des sections transversales (60) qui sont placées parallèlement au plan (58) dans lequel se trouve l'électrode à décharge par effet de couronne plane (40) et qui ont la forme de la pointe (54) de l'électrode à décharge par effet de couronne (40).

3. Capteur de particules (12) selon la revendication 2, **caractérisé en ce que** les sections transversales (60) diminuent à mesure que la distance à l'électrode à décharge par effet de couronne plane augmente en direction d'une normale à l'électrode à décharge par effet de couronne plane.

4. Capteur de particules (12) selon l'une des revendications précédentes, **caractérisé en ce qu'**une partie de l'élément porteur en céramique (34), sur laquelle l'électrode à décharge par effet de couronne plane (40) repose de manière adhésive, et une partie de l'élément porteur en céramique (34), sur laquelle repose l'électrode de masse (42), sont reliées entre elles par au moins une nervure (59) qui fait partie de l'élément porteur monobloc en céramique (34).

5. Procédé de fabrication d'un capteur de particules (12) selon l'une des revendications précédentes, **caractérisé en ce qu'**un élément porteur en céramique (34) est recouvert d'électrodes (40, 42, 44, 46) adhérant de manière plane sur l'élément porteur en céramique (34) et **en ce qu'**une zone partielle (62) de l'élément porteur en céramique (34), laquelle est délimitée par des surfaces limites de l'élément porteur en céramique (34) et sur laquelle repose la pointe (54) de l'électrode à décharge par effet de couronne (40), est exposée de manière à faire saillie, sous forme de pointe, du reste de l'élément porteur en céramique.

6. Procédé selon la revendication 5, **caractérisé en ce que** le détourage est effectué par un procédé d'enlèvement de matière tel que le fraisage.

7. Procédé selon la revendication 5, **caractérisé en ce que** le détourage est effectué lors de la fabrication de l'élément porteur en céramique (34) par un procédé de moulage par injection.

8. Procédé de réalisation d'un capteur de particules (12) selon l'une des revendications 5 à 7, **caractérisé en ce que** l'élément porteur en céramique (34) est pourvu des électrodes (40, 42, 44, 46), reposant de manière adhésive, par sérigraphie avec frittage (Co) commun ultérieur.

9. Procédé selon la revendication 8, **caractérisé en ce qu'**un rayon de courbure de la pointe (54) de l'électrode à décharge par effet de couronne (40) est réduit après la sérigraphie par évaporation de matière de l'électrode à décharge par effet de couronne (40) au moyen d'un rayon laser.
